# EUROPEAN PATENT APPLICATION

(11) **EP 4 675 812 A1**
(43) Date of publication of application: **07.01.2026**
(21) Application number: 25152590.3
(22) Date of filing: 17.01.2025
(51) Int. Cl.: H01M 50/342, H01M 50/167, H01M 10/052, H01M 50/107, H01M 10/04

(54) **BATTERY EXPLOSION-PROOF STRUCTURE AND BATTERY**

(30) Priority: 04.07.2024 CN 202421577038 U
(71) Applicant: Shenzhen Bak Power Battery Co., Ltd., Shenzhen, Guangdong 518000 (CN)
(72) Inventor: ZHAO, Junfeng, Shenzhen, Guangdong 518000 (CN); LI, Fengmei, Shenzhen, Guangdong 518000 (CN)
(74) Representative: Gamba, Alessandro

(57) **Abstract**

The present disclosure provides a battery explosion-proof structure and a battery, involving the technical field of batteries. The battery explosion-proof structure includes a housing body, a current collector, a sealing member, and an explosion-proof sheet. The housing body is provided with an opening; the current collector is arranged in the opening, and is connected to the housing body to define a mounting groove; the sealing member is arranged in the mounting groove, and the sealing member is arranged between the current collector and the housing body; the explosion-proof sheet is snapped into the mounting groove; a part of the explosion-proof sheet can abut against the current collector and the sealing member; and the explosion-proof sheet is provided with an explosion-proof part. The housing body and the current collector of the present disclosure define the mounting groove to mount the explosion-proof sheet, and the mounting groove is sealed by the sealing member, making the housing body form a sealing structure, reducing the situation where the explosion-proof sheet becomes loose after mounting. When the pressure inside the housing body increases, it reaches the preset bursting threshold of the explosion-proof sheet, thereby causing the explosion-proof part of the explosion-proof sheet to deform and form a pressure relief channel for pressure relief, avoiding the occurrence of an explosion due to excessive housing pressure.

## Description

### TECHNICAL FIELD

The present disclosure relates to the technical field of batteries, and specifically to a battery explosion-proof structure and a battery.

### BACKGROUND ART

In lithium-ion battery products, overvoltage or short circuits inside the battery can generate gas, causing internal pressure to increase. When the internal pressure of the battery exceeds the threshold, expansion or explosion is likely to occur. An explosion-proof sheet is arranged in the battery to protect the battery from the effects of abnormal situations such as expansion or explosion. There is a problem where the mounting position of the explosion-proof sheet is not sufficiently tightened, and the explosion-proof sheet may become loose and fall off, thereby affecting the explosion-proof performance of the battery product.

### SUMMARY

The objective of the present disclosure is to provide a battery explosion-proof structure and a battery. The housing body and the current collector of the present disclosure define the mounting groove to fix the explosion-proof sheet, and the mounting groove is sealed by the sealing member, making the housing body form a sealing structure, reducing the loosening and falling of the explosion-proof sheet after mounting. This improves the safety performance of battery explosion-proof structure.

In a first aspect, the present disclosure provides a battery explosion-proof structure, wherein the battery explosion-proof structure includes a housing body, a current collector, a sealing member, and an explosion-proof sheet.

The housing body is provided with an opening.

The current collector is arranged in the opening and is connected to the housing body to define a mounting groove.

The sealing member is arranged in the mounting groove, and the sealing member is arranged between the current collector and the housing body.

The explosion-proof sheet is snapped into the mounting groove, wherein a part of the explosion-proof sheet is capable of abutting against the current collector and the sealing member, and the explosion-proof sheet is provided with an explosion-proof part.

In one possible embodiment of the present disclosure, one end of the housing body is bent to form a first bending part, and the first bending part and the current collector jointly define the mounting groove.

In one possible embodiment of the present disclosure, an outer peripheral side of the current collector extends to form a second bending part so that the current collector forms a recess, and the explosion-proof sheet is mounted in the recess.

In one possible embodiment of the present disclosure, the second bending part abuts against a side wall of the housing body.

In one possible embodiment of the present disclosure, the explosion-proof sheet is a disc-shaped structure.

In one possible embodiment of the present disclosure, the explosion-proof part includes first blasting notch grooves and a second blasting notch groove, and the first blasting notch grooves do not intersect with the second blasting notch groove.

In one possible embodiment of the present disclosure, the first blasting notch grooves are multiple, and the multiple first blasting notch grooves are capable of intersecting at one intersection point.

In one possible embodiment of the present disclosure, the intersection point is located at a center position of the explosion-proof sheet.

In one possible embodiment of the present disclosure, the second blasting notch groove is of an annular structure or a frame-like structure, and the second blasting notch groove is arranged around a circumference of the first blasting notch grooves.

In a second aspect, the present disclosure provides a battery, including the battery explosion-proof structure described in any one of the above embodiments.

Compared with the prior art, the beneficial effects of the present disclosure are described below. The present disclosure provides a battery explosion-proof structure and a battery, wherein the housing body and the current collector define the mounting groove to limit the explosion-proof sheet, thus reducing the loosening of the explosion-proof sheet. The mounting groove is sealed by the sealing member, making the housing body form a sealing structure, reducing the loosening and falling of the explosion-proof sheet after mounting. The explosion-proof sheet is provided with an explosion-proof part. When the pressure inside the housing body increases, it reaches the preset bursting threshold of the explosion-proof sheet, thereby causing the explosion-proof part of the explosion-proof sheet to deform and form a pressure relief channel for pressure relief, avoiding the occurrence of an explosion due to excessive pressure of the housing body. The objective of reducing the pressure inside the housing body is achieved, and the safety performance of the battery explosion-proof structure is improved.

### BRIEF DESCRIPTION OF DRAWINGS

To more clearly illustrate the technical solutions of the embodiments of the present disclosure, the following will briefly introduce the drawings used in the embodiments. It should be understood that the following drawings only show some embodiments of the present disclosure, and therefore they should not be regarded as a limitation on the scope. Those ordinary skilled in the art can also obtain other related drawings based on these drawings without inventive efforts.
FIG. 1 is a schematic diagram of a structure of a battery explosion-proof structure of the battery provided in some embodiments of the present disclosure;
FIG. 2 is a schematic structural diagram of a partial structure of part A in FIG. 1;
FIG. 3 is a schematic diagram of a structure of an explosion-proof sheet of a battery explosion-proof structure provided in some embodiments of the present disclosure; and
FIG. 4 is another schematic diagram of a structure of an explosion-proof sheet of a battery explosion-proof structure provided in some embodiments of the present disclosure.

### Description of major component symbols:

100- battery explosion-proof structure; 110- housing body; 111- opening; 112- mounting groove; 113- first bending part; 120- current collector; 121- second bending part; 122- recess; 130-sealing member; 140- explosion-proof sheet; 141- first blasting notch groove; 142- second blasting notch groove; 143- intersection point; 200-battery.

### DETAILED DESCRIPTION OF EMBODIMENTS

To clarify the objectives, technical solutions, and advantages of the embodiments of the present disclosure, the following description of the technical solutions in the embodiments of the present disclosure will be arranged in a clear and comprehensive manner, in conjunction with the drawings in the embodiments of the present disclosure. Clearly, the described embodiments are part of the embodiments of the present disclosure and not the entirety of the embodiments. The components of embodiments of the present disclosure which are generally described and illustrated in the drawings herein can be arranged and designed in a variety of different configurations.

Therefore, the detailed description of the embodiments of the present disclosure arranged in the drawings is not intended to limit the scope of protection of the present disclosure but merely represents selected embodiments of the present disclosure. Based on the embodiments in the present disclosure, all other embodiments obtained by those of ordinary skill in the art without making inventive efforts are within the scope of protection of the present disclosure.

It should be noted that similar numerals and letters denote similar terms in the following drawings so that once an item is defined in one drawing, it does not need to be further discussed in subsequent drawings.

In the description of the present disclosure, it should be noted that terms such as "center", "upper", "lower", "left", "right", "vertical", "horizontal", "inner", "outer", and similar directional or positional terms are based on the orientation or positional relationship as shown in the drawings or are common orientations or positional relationships when the product of the present disclosure is used. These terms are used for ease of description and simplification of the description and do not imply or suggest that the device or element referred to must have a specific orientation or be constructed and operated in a specific orientation. Therefore, these terms should not be understood as limitations on the present disclosure. In addition, the terms "first", "second", and "third" are only used to distinguish the descriptive and are not to be construed as indicating or implying relative importance.

In addition, the terms "horizontal", "vertical", and "overhang" do not mean that elements are required to be absolutely horizontal or overhanging, but can be slightly inclined. For example, "horizontal" only means that its direction is more horizontal than "vertical", and it does not mean that the structure must be completely horizontal, but can be slightly inclined.

In the description of the present disclosure, it should also be noted that unless otherwise clearly stipulated and limited, the terms "provide", "mount", "interconnect", and "connect" should be understood in a broad sense, for example, it can be a fixed connection, a detachable connection, or an integral connection; it can be a mechanical connection or an electrical connection; and it can be a direct connection, an indirect connection through an intermediary, or an internal communication between two components. Those of ordinary skill in the art can understand the meanings of the above terms in the present disclosure according to specific situations.

Some embodiments of the present disclosure are described in detail below, in conjunction with the drawings. In the absence of conflict, the following embodiments and features of the embodiments may be combined with each other.

### Embodiment 1

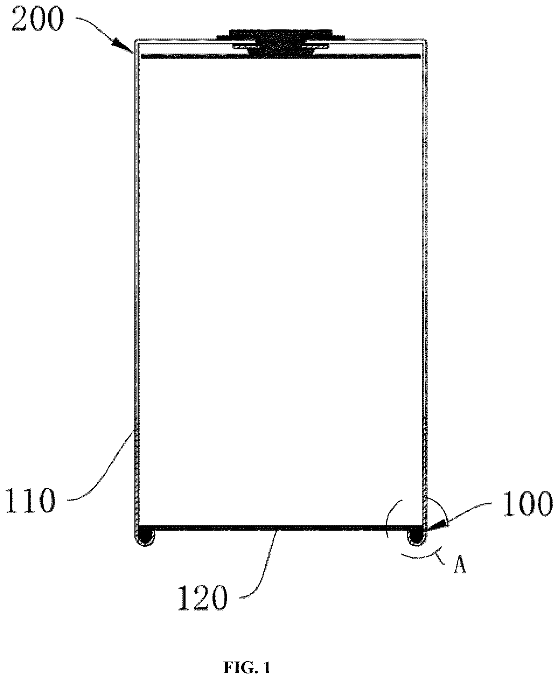

Referring to FIG. 1, the embodiment of the present disclosure provides a battery explosion-proof structure 100, wherein the battery explosion-proof structure 100 includes a housing body 110, a current collector 120, a sealing member 130, and an explosion-proof sheet 140.

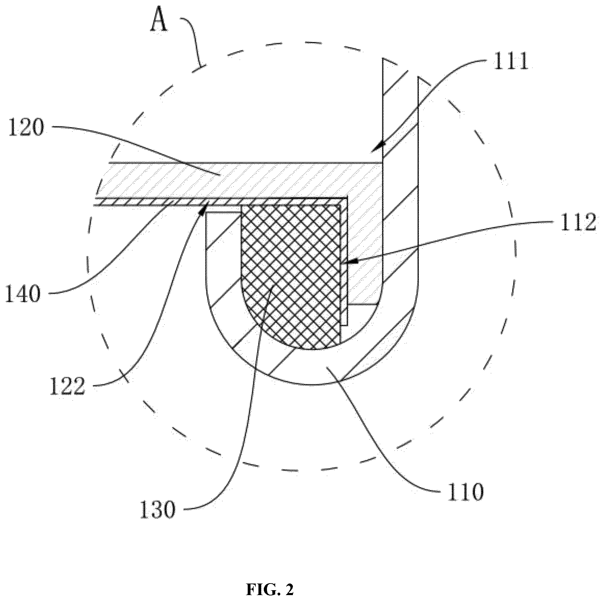

Specifically, as shown in FIG. 1 and FIG. 2, the housing body 110 is provided with an opening 111. The current collector 120 is arranged in the opening 111 and is connected to the housing body 110 to define a mounting groove 112. The sealing member 130 is arranged in the mounting groove 112, and the sealing member 130 is arranged between the current collector 120 and the housing body 110. The explosion-proof sheet 140 is snapped into the mounting groove 112, wherein a part of the explosion-proof sheet 140 is capable of abutting against the current collector 120 and the sealing member 130, and the explosion-proof sheet 140 is provided with an explosion-proof part. The housing body 110 and the current collector 120 define the mounting groove 112 to limit the explosion-proof sheet 140, thus reducing the loosening of the explosion-proof sheet 140. The mounting groove 130 is sealed by the sealing member 112, making the housing body 110 form a sealing structure, reducing the loosening and falling of the explosion-proof sheet 140 after mounting. The explosion-proof sheet 140 is provided with an explosion-proof part. When the pressure inside the housing body 110 increases, it reaches the preset bursting threshold of the explosion-proof sheet 140, thereby causing the explosion-proof part of the explosion-proof sheet 140 to deform and form a pressure relief channel for pressure relief, avoiding the occurrence of an explosion due to excessive pressure of the housing body 110. The objective of reducing the pressure inside the housing body 110 is achieved.

It can be understood that the main function of the current collector 120 is to serve as the conductive path for current inside the battery 200, typically configured for connecting the positive and negative electrode materials to the external circuit. It helps reduce the internal resistance of the battery 200 and improve the current conduction efficiency. The explosion-proof sheet 140 is an important component in the safety design of the battery 200, with the main function of providing a safe pressure relief channel when the internal pressure of the battery 200 increases abnormally, thus preventing the battery 200 from exploding. When the gas accumulates inside the battery 200 due to overheating, short circuit, or other abnormal conditions, and the pressure reaches a predetermined threshold, the explosion-proof sheet 140 will rupture or deform, releasing the internal pressure, possibly accompanied by a small amount of electrolyte leakage at the same time, but this can prevent severe damage to the battery 200 structure and more dangerous explosion accidents.

In one embodiment, optionally, referring to FIG. 1 and FIG. 2, one end of the housing body 110 is bent to form a first bending part 113, and the first bending part 113 and the current collector 120 jointly define the mounting groove 112. This allows the explosion-proof sheet 140 to be inserted into the mounting groove 112.

Optionally, referring to FIG. 2, an outer peripheral side of the current collector 120 extends to form a second bending part 121 so that the current collector 120 forms a recess 122, and the explosion-proof sheet 140 is mounted in the recess 122. Accordingly, the second bending part 121 forms the recess wall of the recess 122, and the explosion-proof sheet 140 can be mounted in the groove 122, making the explosion-proof sheet 140 abut against the current collector 120.

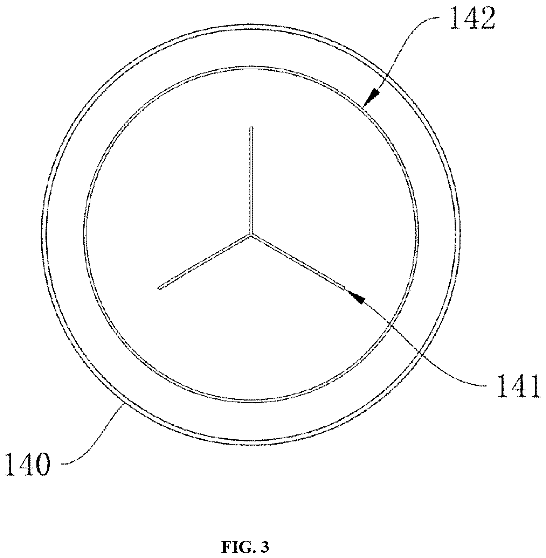

In one embodiment, optionally, referring to FIG. 3, the explosion-proof sheet 140 is a disc-shaped structure, making the explosion-proof sheet 140 enclosed at one end of the housing body 110, so as to match the shape structure of the current collector 120 and the housing body 110. The explosion-proof sheet 140 can protect the safety of devices and personnel by rupturing itself at a critical moment.

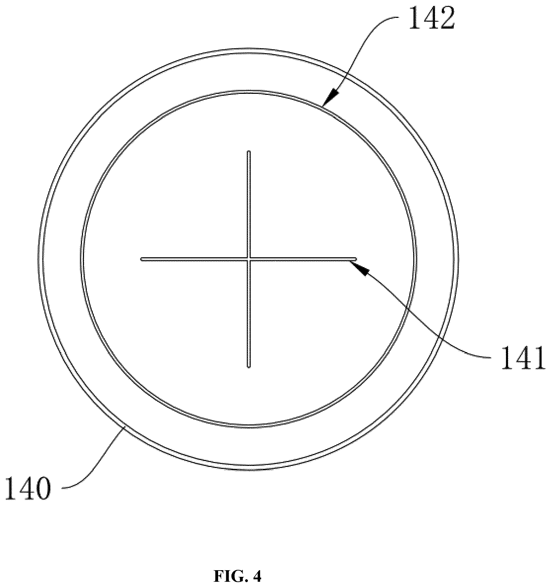

In one embodiment, optionally, referring to FIG. 3 and FIG. 4, the explosion-proof part includes first blasting notch grooves 141 and a second blasting notch groove 142, and the first blasting notch grooves 141 do not intersect with the second blasting notch groove 142. When the pressure inside the housing body 110 is too large, by rupturing the first blasting notch groove 141 and/or the second blasting notch groove 142, the gas inside the housing body 110 is allowed to be discharged more quickly, thus reducing the pressure inside the housing 110, and ensuring the safety performance of the battery 200. At the same time, by rupturing along the traces of the first blasting notch groove 141 and/or the second blasting notch groove 142, the situation is reduced where the explosion-proof sheet 140 directly detaches and flies off, so as to avoid the damage to the personnel and devices.

Optionally, the first blasting notch grooves 141 are multiple, and the multiple first blasting notch grooves 141 are capable of intersecting at one intersection point 143.

Optionally, referring to FIG. 3 and FIG. 4, the intersection point 143 is located at a center position of the explosion-proof sheet 140.

Optionally, referring to FIG. 4, the second blasting notch groove 142 is of an annular structure or a frame-like structure, and the second blasting notch groove 142 is arranged around a circumference of the first blasting notch grooves 141. The second blasting notch groove 142 can be of the annular structure, or the second blasting notch groove 142 can be of the frame-like structure.

In summary, the housing body 110 and the current collector 120 of the battery explosion-proof structure 100 define the mounting groove 112 to limit the explosion-proof sheet 140, thus reducing the loosening of the explosion-proof sheet 140. The mounting groove 130 is sealed by the sealing member 112, making the housing body 110 form a sealing structure, reducing the loosening and falling of the explosion-proof sheet 140 after mounting. The explosion-proof sheet 140 is provided with an explosion-proof part. When the pressure inside the housing body 110 increases, it reaches the preset bursting threshold of the explosion-proof sheet 140, thereby causing the explosion-proof part of the explosion-proof sheet 140 to deform and form a pressure relief channel for pressure relief, avoiding the occurrence of an explosion due to excessive pressure of the housing body 110. The objective of reducing the pressure inside the housing body 110 is achieved, and the safety performance of the battery explosion-proof structure 100 is improved.

### Embodiment 2

Referring to FIG. 1, the embodiment of the present disclosure provides another battery explosion-proof structure 100, wherein the battery explosion-proof structure 100 includes a housing body 110, a current collector 120, a sealing member 130, and an explosion-proof sheet 140.

Specifically, as shown in FIG. 1 and FIG. 2, the housing body 110 is provided with an opening 111. The current collector 120 is arranged in the opening 111 and is connected to the housing body 110 to define a mounting groove 112. The sealing member 130 is arranged in the mounting groove 112, and the sealing member 130 is arranged between the current collector 120 and the housing body 110. The explosion-proof sheet 140 is snapped into the mounting groove 112, and a part of the explosion-proof sheet 140 is capable of abutting against the current collector 120 and the sealing member 130. This reduces the loosening of the explosion-proof sheet 140. The mounting groove 130 is sealed by the sealing member 112, making the housing body 110 form a sealing structure, reducing the loosening and falling of the explosion-proof sheet 140 after mounting.

In the embodiment, the explosion-proof sheet 140 is provided with an explosion-proof part, and the housing body 110 and the current collector 120 define the mounting groove 112 to limit the explosion-proof sheet 140. When the pressure inside the housing body 110 increases, it reaches the preset bursting threshold of the explosion-proof sheet 140, thereby causing the explosion-proof part of the explosion-proof sheet 140 to deform and form a pressure relief channel for pressure relief, avoiding the occurrence of an explosion due to excessive pressure of the housing body 110. The objective of reducing the pressure inside the housing body 110 is achieved.

In one embodiment, optionally, referring to FIG. 1 and FIG. 2, one end of the housing body 110 is bent to form a first bending part 113, and the first bending part 113 and the current collector 120 jointly define the mounting groove 112. This allows the explosion-proof sheet 140 to be snapped into the mounting groove 112. Exemplarily, the first bending part 113 is bent toward the current collector 120.

Optionally, referring to FIG. 2, an outer peripheral side of the current collector 120 extends to form a second bending part 121 so that the current collector 120 forms a recess 122, and the explosion-proof sheet 140 is mounted in the recess 122. Accordingly, the second bending part 121 forms the recess wall of the recess 122, and the explosion-proof sheet 140 can be mounted in the groove 122, making the explosion-proof sheet 140 abut against the current collector 120. Exemplarily, the second bending part is of the annular structure.

Furthermore, the second bending part 121 abuts against the side wall of the housing body 110. That is to say, the second bending part 121 of the current collector 120 abuts against the side wall of the housing body 110, so as to facilitate the fixing and positioning of the current collector 120. This reduces the gap between the current collector 120 and the housing body 110 and provides better sealing performance.

In one embodiment, optionally, referring to FIG. 3, the explosion-proof sheet 140 is a disc-shaped structure, making the explosion-proof sheet 140 enclosed at one end of the housing body 110, so as to match the shape structure of the current collector 120 and the housing body 110. Exemplarily, the explosion-proof sheet 140 can also be made of composite materials with coating technology, to enhance its corrosion resistance, fatigue resistance, temperature adaptability, and other properties. The disc-shaped structure of the explosion-proof sheet 140, through its structural design and material selection, can protect the safety of the devices and personnel by rupturing itself at a critical moment.

In one embodiment, optionally, referring to FIG. 3 and FIG. 4, the explosion-proof part includes first blasting notch grooves 141 and a second blasting notch groove 142, and the first blasting notch grooves 141 do not intersect with the second blasting notch groove 142. When the pressure inside the housing body 110 is too high, by rupturing the first blasting notch grooves 141 and/or the second blasting notch groove 142, the gas inside the housing body 110 is allowed to be discharged more quickly, thus reducing the pressure inside the housing 110, and ensuring the safety performance of the battery 200. It can rupture along the traces of the first blasting notch grooves 141 and/or the second blasting notch groove 142 at the same time. In other words, it can rupture along the trace of the first blasting notch groove 141, or along the trace of the second blasting notch groove 142; or it can rupture along the traces of both the first blasting notch groove 141 and the second blasting notch groove 142. Therefore, the situation is reduced where the explosion-proof sheet 140 directly detaches and flies off, so as to avoid the damage to the personnel and devices.

Optionally, the first blasting notch grooves 141 are multiple, and the multiple first blasting notch grooves 141 are capable of intersecting at one intersection point 143. Furthermore, two adjacent first blasting notch grooves 141 are arranged at an angle to each other, and the multiple first blasting notch grooves 141 can enhance the explosion-proof performance of the explosion-proof sheet 140.

Optionally, referring to FIG. 3 and FIG. 4, the intersection point 143 is located at a center position of the explosion-proof sheet 140. Exemplarily, two, three, or four first blasting notch grooves 141 can be provided. When three blasting notch grooves 141 are provided, the angle between two adjacent first blasting notch grooves 141 is 120°, and the three first blasting notch grooves 141 form a "A" shaped structure (Y-shaped structure). When four blasting notch grooves 141 are provided, the angle between two adjacent first blasting notch grooves 141 is 90°, and the four first blasting notch grooves 141 form a cross-shaped structure. More than four of the first blasting notch grooves 141 can also be provided, which will not be detailed herein.

Optionally, referring to FIG. 4, the second blasting notch groove 142 is of an annular structure or a frame-like structure, and the second blasting notch groove 142 is arranged around a circumference of the first blasting notch groove 141. Accordingly, the second blasting notch groove 142 can be an annular structure or a frame-like structure of which its beginning and end are not connected. That is to say, the annular structure or frame-like structure is provided with a notch, to reduce the situation where fragments of the explosion-proof sheet 140 fly off when the second blasting notch groove 142 ruptures. The second blasting notch groove 142 can be of the annular structure, or the second blasting notch groove 142 can be of the frame-like structure.

### Embodiment 3

The embodiment of the present disclosure also provides a battery 200, including the battery explosion-proof structure 100 from embodiment 1 or embodiment 2, wherein a steering column guard of a vehicle can be mounted using the battery explosion-proof structure 100, and the vehicle benefits from all the advantageous effects of the battery explosion-proof structure 100, which will not be detailed further herein.

In all examples shown and described herein, any specific values should be interpreted as merely exemplary and not as limiting. Therefore, other examples of exemplary embodiments may have different values.

The above-mentioned embodiments only express several embodiments of the present disclosure. The descriptions thereof are relatively specific and detailed, but they should not be construed as limiting the scope of the present disclosure. It should be pointed out that for those of ordinary skill in the art, several modifications and improvements can be made without departing from the concept of the present disclosure, which all belong to the protection scope of the present disclosure.

## Claims

1. A battery explosion-proof structure (100), comprising
a housing body (110), wherein the housing body (110) is provided with an opening (111); a current collector (120), wherein the current collector (120) is arranged in the opening (111) and is connected to the housing body (110) to define a mounting groove (112);
a sealing member (130), wherein the sealing member (130) is arranged in the mounting groove (112), and the sealing member (130) is arranged between the current collector (120) and the housing body (110); and
an explosion-proof sheet (140), wherein the explosion-proof sheet (140) is snapped into the mounting groove (112), wherein a part of the explosion-proof sheet (140) is capable of abutting against the current collector (120) and the sealing member (130), and the explosion-proof sheet (140) is provided with an explosion-proof part.

2. The battery explosion-proof structure (100) according to claim 1, wherein one end of the housing body (110) is bent to form a first bending part (113), and the first bending part (113) and the current collector (120) jointly define the mounting groove (112).

3. The battery explosion-proof structure (100) according to claim 2, wherein an outer peripheral side of the current collector (120) extends to form a second bending part (121) so that the current collector (120) forms a recess (122), and the explosion-proof sheet (140) is mounted in the recess (122).

4. The battery explosion-proof structure (100) according to any one of claims 1 to 3, wherein the second bending part (121) abuts against a side wall of the housing body (100).

5. The battery explosion-proof structure (100) according to claim 1, wherein the explosion-proof sheet (140) is a disc-shaped structure.

6. The battery explosion-proof structure (100) according to any one of claims 1 to 5, wherein the explosion-proof part comprises first blasting notch grooves (141) and a second blasting notch groove (142), and the first blasting notch grooves (141) do not intersect with the second blasting notch groove (142).

7. The battery explosion-proof structure (100) according to claim 6, wherein the first blasting notch grooves (141) are multiple, and the multiple first blasting notch grooves (141) are capable of intersecting at one intersection point (143).

8. The battery explosion-proof structure (100) according to any one of claims 1 to 7, wherein the intersection point (143) is located at a center position of the explosion-proof sheet (140).

9. The battery explosion-proof structure (1000 according to any one of claims 1 to 6, wherein the second blasting notch groove (142) is of an annular structure or a frame-like structure, and the second blasting notch groove (142) is arranged around a circumference of the first blasting notch grooves (141).

10. A battery (200), comprising the battery explosion-proof structure (100) according to any one of claims 1 to 9.
